# EUROPEAN PATENT SPECIFICATION

(11) **EP 2 341 033 B1**
(45) Date of publication and mention of the grant of the patent: **06.04.2016**
(21) Application number: 10197129.9
(22) Date of filing: 28.12.2010
(51) Int. Cl.: C02F 1/50, C02F 3/34, C02F 3/30, C02F 101/10

(54) **Agent and method for quick suppression of anaerobic bacteria in wastewater**
Wirkstoff und Verfahren zur schnellen Unterdrückung anaerober Bakterien in Abwasser
Agent et procédé de suppression rapide de bactéries anaérobiques dans les eaux usées

(30) Priority: 29.12.2009 DE 102009055381
(43) Date of publication of application: 06.07.2011
(73) Proprietor: YARA International ASA, 0202 Oslo (NO)
(72) Inventor: Wasow, Günther, D-10543 Berlin (DE); Ettl, Marina, DE-46519 Alpen-Veen (DE)
(74) Representative: Onsagers AS

(56) References cited:
- WO-A1-2009/011920
- AU-A1- 2006 203 567
- JP-A- 10 085 785
- JP-A- 2003 290 793
- JP-A- 2004 049 940
- US-A- 5 750 392

## Description

The invention concerns an agent for quick suppression of anaerobic bacteria present in wastewater and a method for treatment of wastewater. The major object of the present invention is to reduce hydrogen sulphide emissions from waste water.
Anaerobic bacteria dominate over aerobic species at the absence of Oxygen in waste water. The anaerobic bacteria use sulphates as electron acceptors within their metabolism. Sulphates are generally available in waste water. For that reason anaerobic conditions in waste water lead in many cases to sulphide formation. The formation of sulphide is unwanted in waste water treatment processes due to e.g. the unpleasant odour.
The addition of nitrates is a proven method to prevent anaerobic conditions in the wastewater. By nitrate application the de-nitrifying bacteria will dominate over the sulphate reducing bacteria. The result is minimization of sulphide formation and later on the emission of hydrogen sulphide (H₂S). Experience shows, that the sulphide formation as well as an oxidation of sulphide demands retention times of about 1 hour in the reactor, mostly the sewer, if nitrates are used.
US 5,405,531 relates to a method for the reduction and prevention of hydrogen sulphide gas formation in an aqueous system, wherein nitrite and nitrate and/or molybdate ions are introduced to the aqueous system.

US 4,681,687 discloses the use of alkali metal nitrite for controlling the growth of sulphate reducing bacteria and odour in flue gas desulfurization sludge.

WO 98/51625 discloses a method for reducing the level of hydrogen sulphide in waste water systems by addition of aqueous solutions of metal nitrates and suspensions of polycyclic quinones or precursors thereof.

US 5,558,772 discloses a nitrite solution being unaffected by the Nitrobacter agilis bacteria known to oxidize nitrite ions to nitrate ions. The nitrite solution teached by US 5,558,772 is used as corrosion inhibitor and is silent of the use of the nitrite solution in respect of preventing hydrogen sulphide gas formation in waste water.

JP100085785 teaches the prevention of hydrogen sulphide gas formation by making nitrate ions and nitrite ions exist in the water to be treated to control the activity of denitrifying bacteria. In the process, pH is adjusted to 6.5 or less, and by this pH adjustment, it is to be understood that the denitrifying bacteria may be controlled effectively.
Calcium nitrate addition to anaerobic processes in biogas plants with agricultural background is further described in the PCT patent application WO 2008/090231 A2. In said patent application, a calcium nitrate solution is used to minimize H₂S production, an unwanted side-product of anaerobic processes.
Calcium nitrate as an addition to anaerobic digestion processes aiming at reducing sulphide production is furthermore described in the US patent 4,505,819, wherein a method using a moving solid bed reactor is disclosed.
In US patent 7,326,340, systems and methods are disclosed involving addition of nitrate to reduce the production of foul-smelling sulfide products.

In US patent 7,285,207, a method to reduce hydrogen sulphide is disclosed involving the addition of nitrate and an alkaline compound.

In AU2006203567 a method of odour removal is disclosed from stale wastewater comprising the addition of an agent comprising an aqueous mixture of 6.3wt% inorganic nitrate and 2.5wt% inorganic nitrite.

As to other effects of nitrate in sludge treatment processes, it is reported that the addition of nitrate has a disadvantageous effect on methane production. For example, it has been reported that methane producing bacteria is inhibited by nitrate addition (Allison and Macfarlane, 1998, "Effect of nitrate on methane production and fermentation by slurries of human faecal bacteria", J. Gen. Microbiol. 134, 1397-1405, Klüber and Conrad 1998, "Inhibitory effects of nitrate, nitrite, NO and N2O on methanogenesis by Methanosarcina barkeri and Methanobacterium bryantii", FEMS Microbiology Ecology 25:331-339, Mohanakrishnan et al (2008), Nitrate effectively inhibits sulfide and methane production in a laboratory scale sewer reactor. Water Research, 42, pp. 3961-3971). This is further in accordance with the report of Bolag and Czlonkowski (1973) (Inhibition of methane formation in soil by various nitrogen-containing compounds. Soil Biology and Biochemistry. 5 (5), pp.673-678) which found that the evolution of methane from soil samples under anaerobic conditions was suppressed by adding nitrogen containing chemicals.

DE 3917451 discloses a process for biological purification of concentrated waste water, wherein the organically bound nitrogen and ammonium containing waste waters are fed to a reactor in which purified waste water and sludge are also returned as nitrite and nitrate-containing re-circulated material.

Within commonly known de-nitrification processes, nitrate is stepwise reduced to elementary nitrogen, and nitrite is an important intermediate. As nitrite is part of the metabolism it can be expected that the addition of nitrite and nitrate have a similar effect in terms of oxidizing effects. For this kind of comparison the Oxidation Power (OP) of an Oxidizer needs to be considered.
The Oxidation Power Demand (OPD) is defined as the amount of oxidation power (OP) needed to oxidize completely one or more organic compounds in sludge, mixtures or other materials. OPD is fundamentally expressed as amount of electrons that needs to be transferred in the redox process for the complete oxidation, but more generally it can be expressed as the amount of electron acceptors needed to receive these electrons. As an example, 180 mg/l of glucose = 1 mM would transfer 24 mM electrons to the electron acceptor for complete oxidation to CO₂ and H₂O:

C₆H₁₂O₆ + 24OH- -> 6CO₂ + 18H₂O + 24e- (1)

This half-reaction must be balanced with a half-reaction receiving these electrons, a reduction of an electron acceptor. An electron acceptor can be numerous substances, but oxygen and nitrate is relevant in this context:

4.8NO₃- + 24e- + 28.8H+ -> 2.4N₂ + 14.4H₂O (2)

6O2 + 24e- + 24H+ -> 12H₂O (3)

The full reaction in each case would be:

C₆H₁₂O₆ + 4.8NO₃- + 4.8H+ -> 6CO₂ + 2.4N₂ + 8.4H₂O (4) = (1)+(2)

C₆H₁₂O6 + 6O₂ -> 6CO₂ + 6H₂O (5) = (1)+(3)

Thus a comparison of activity suppression by oxidizing agents must be done at equal OP dosage.
Nitrite does not only posses a high potential of oxidation, but also is known to inhibit the metabolism of some bacteria, such as septic bacteria present in wastewater. Therefore nitrites are used in so-called pickling salt or curing salt mixtures for meat products to suppress undesired bacteria species.
The present invention provides an agent for treatment of wastewater for suppression of septic bacteria and the use thereof in a method for fast suppression of septic bacteria, and thus an improved method for reducing hydrogen sulphide formation.
In order to accelerate the suppression of the metabolism of sulphate reducing bacteria a solution containing nitrite and/or an extract from activated sludge sufficiently supplied with oxygen and/or nitrate and obtained suppressing substances, is added simultaneously with the nitrate to waste water treatment system. The activity of septic bacteria present in the wastewater is strongly reduced immediately after the addition of the solution and the septic bacteria are not able to produce suppressing substances against nitrifying species by themselves.
In particular, the present invention provides an agent for treatment of wastewater for fast suppressing of septic bacteria containing an aqueous solution of nitrate and nitrite wherein the counter ions of nitrite are sodium ions and the counter ions of nitrate is calcium ions, and wherein the aqueous solution contains 42 to 45 weight % calcium nitrate and 1 to 4 weight % sodium nitrite.

In a preferred embodiment, the agent of the invention further comprises an extract from activated sludge sufficiently supplied with oxygen and/or nitrate. The counter ions of nitrite according to this embodiment of the invention are sodium or potassium ions and the counter ions of nitrate are sodium, potassium, calcium and /or magnesium ions. More particularly, the aqueous solution may contain 42 to 45 weight % calcium nitrate and 1 to 4 weight % sodium nitrite and/ or 0.3 to 5 weight % of an extract from activated sludge sufficiently supplied with oxygen and/or nitrate.

According to another aspect of the invention, a method is provided for fast suppressing of septic bacteria, wherein an agent for wastewater treatment according to the present invention is added to a waste water treatment plant.

According to a preferred embodiment of the method of the invention, 50 to 500 mg nitrite/m³ waste water and 5 to 30 mg/m³ wastewater of extract from activated sludge is added. According to another preferred embodiment of the method of the invention, all additives are dissolved in a common solution, dosed to the water dependent on volume, temperature and pollution load.
The production of isolated bacteria enzymes and suppressing substances that is free from parts of the bacteria cells belongs to the state of the art. The general public is familiar with such products from detergent enzymes and penicillin. A solution that contains in enriched form bacteria enzymes and suppressing substances that works against the growth of sulphate reducing bacteria could be produced as a filtrate from an activated sludge by use of a filter press or centrifuge.

### Brief description of the drawings

In the drawings,
Figure 1 show the effect of different dosages of calcium nitrate (CN) solution and sodium nitrite (SN) solution in protecting a waste water test reactor turning anaerobe.
Figure 2 shows the dependency of sulphide formation towards calcium nitrate (CN) and sodium nitrite (SN) application in a waste water test reactor.
Figure 3 shows the dependency of H₂S development towards application of calcium nitrate (CN) and sodium nitrite (SN) in a waste water test reactor.

Waste water treatment processes can be designed and engineered to operate using a number of different process configurations, e.g. in respect of consisting of discontinuous batch/reactor systems or continuous systems. A batch system is the simplest form of system, wherein the biomass/waste water to be digested is added to a reactor in one batch and then is sealed for the duration of the process. In continuous digestion systems, the biomass/waste water to be digested is continuously added in stages to the reactor. Both single and multiple digester reactors placed in sequence are commonly used.

Waster water treatment processes may also be constructed differently in respect of involving a one-stage or single stage process or a two-stage or multi stage process. In this respect, a single step process represents a process wherein all the biological reactions happen within one single sealed reactor. A two-stage or multi stage process involves the use of more than one reactor, and wherein each reactor is optimized with respect to providing optimal conditions for the biological processes to be conducted within each reactor.

The agent of the present invention may be added to the various waste water treatment processes known to the skilled person in the art, i.e. in batch and continuous processes and in single and multi stage processes.

For batch reactors, the agent of the present invention is added in the start-up of a batch.

The present invention is applicable to all the various waste water treatment processes discussed above.

The present invention is in the following illustrated by way of non-limiting examples of a selection of embodiments.

### Examples

### Example 1

Batch reactors were used in a laboratory scale test to investigate the effect of different dosages of calcium nitrate (CN) solution and sodium nitrite (SN) solution in protecting the system turning anaerobe. The test was performed according to FRANKE et al. 2010 (Laboratory test method of chemicals to reduce emissions of H2S and odours in wastewater. NOSE 2010 conference proceedings, Chemical Engineering Transactions, Volume 23, 2010 AIDIC Associazione Italiana Di Ingegneria Chimica, ISBN 987-88-95608-14-3*).*

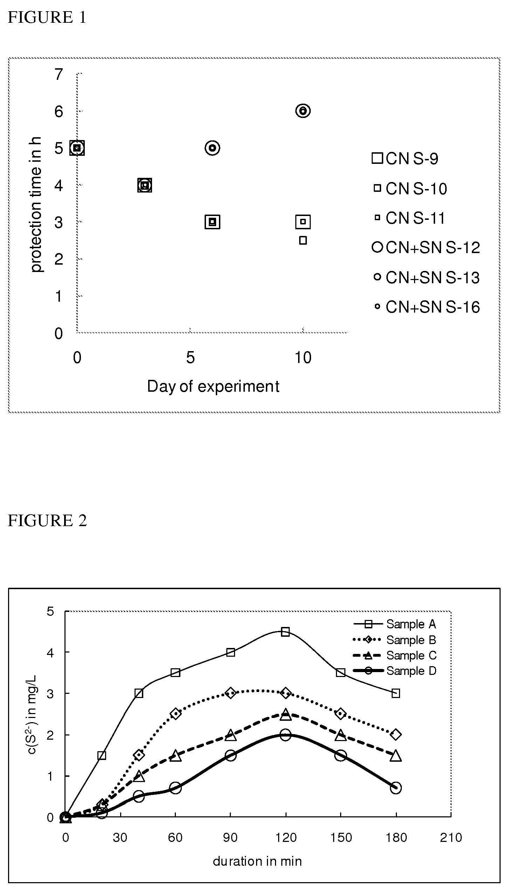

The reactors were filled every day with a new batch, so that a bio film could establish on the carrier material. In this experiment the effect of dosages of the nitrate and nitrite at the same Oxidation Power level was tested. Within the experiment the time was measured in hours until conditions changed from anoxic into anaerobic state. The change of conditions was detected by colour change of Resazurin, a Oxygen Reduction Potential (ORP) tracer. The result was that the CN treatment stabilized on a protection duration of 3 hours and the protection time increased up to 6 hours by CN+SN treatment, cf. the table below and figure 1.

| **Sample** | **c(SN)** | **OS (NO₂-N)** | **OP (NO₂-N)** | **c(CN)** | **OS (NO₃-N)** | **OP (NO₃-N)** | **OP** |
|---|---|---|---|---|---|---|---|
| | mg/L | | | mg/L | | | |
| CN (S-9, S10, S11) | 0 | 3 | 0.00 | 112 | 5 | 6.85 | 6.85 |
| CN+SN (S12, S13, S16) | 39 | 3 | 1.70 | 85 | 5 | 5.16 | 6.86 |

### Example 2

The test setup of experiment 1 was also used to investigate the dependency of sulphide formation towards calcium nitrate (CN) and sodium nitrite (SN) application. This time the OP increased slightly as here the CN dosage was kept constant. The reactors were filled every day with a new batch, so that a bio film could establish on the carrier material. The results indicate that the sulphide production is reduced significantly. Remarkable is that the sulphide concentrations decreased stronger than the OP of the treatments was increased.

| **Sample** | **description** | **c(SN)** | **OS (NO₂**-**N)** | **OP (NO₂**-**N)** | **c(CN)** | **OS (N03-N)** | **OP (NO3-)** | **OP** | **OP** |
|---|---|---|---|---|---|---|---|---|---|
| | | mg/L | - | mmol/L | mg/L | - | mmol/L | mmol/L | |
| A | control without dosing | 0 | 3 | 0.00 | 0 | 5 | 0.00 | 0.00 | 0% |
| B | recommended dosage CN | 0 | 3 | 0.00 | 111 | 5 | 6.77 | 6.77 | 100% |
| C | recomended dosage CN + SN | 15 | 3 | 0.64 | 111 | 5 | 6.77 | 7.41 | 109% |
| D | recommended dosage CN + 2x SN | 32 | 3 | 1.37 | 111 | 5 | 6.77 | 8.14 | 120% |

The results are shown in figure 2.

### Example 3

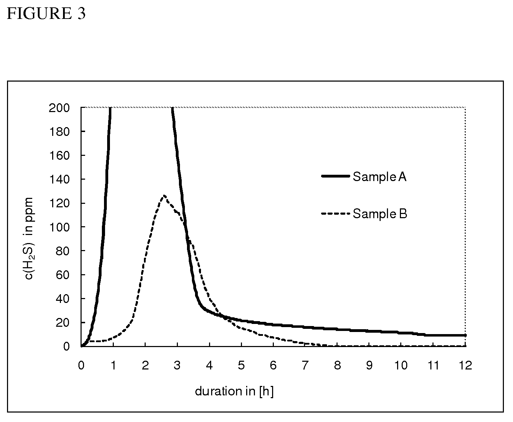

The test setup of experiment 1 was also used to investigate the dependency of H₂S development towards application of calcium nitrate (CN) and sodium nitrite (SN). Sample A was treated with a specific dosage of 0.11 g/L CN and Sample B was treated with additionally 0.03 g/L SN. The reactors were filled every day with a new batch, so that a bio film could establish on the carrier material. The results indicate that the H₂S diffusion into the headspace is delayed due to additional nitrite. Especially the relation between concentrations of H₂S indicates that the effect is not a result of added OP but the inhibiting effect of nitrites on the SRBs.
The results are shown in figure 3.

### Example 4

In a full scale test the solution of 45% calcium nitrate was dosed into the pumping pit of a 800 m long pressure main containing waste water. Irregular discharge of wastewater at high water flow rate occurred often and reduced the retention time below 30 minutes.
The dosage of even high dosages of calcium nitrate was not successful to prevent H2S formation. A strong smell of hydrogen sulphide was observed often.
With the application of a 45 % solution of calcium nitrate containing additional 4 % sodium nitrite, the situation changed. The activity of the anaerobic bacteria could be suppressed, so that a retention time of less than 30 minutes was sufficient for consuming the added concentration of nitrate ions. The wastewater at the end of the pressure main was free from hydrogen sulphide.

### Example 5

Further experiments were carried out in the same arrangement. An extract was added to the calcium nitrate solution in different concentrations. The extract was achieved from activated sludge with a good supply of air. A quick inhibition of Sulphate reducing bacteria (SRB) also occurs in this case, so that the latently present nitrifying bacteria could quickly achieve their activity.
An addition of calcium nitrate with 0.8 % extract was also sufficient and no hydrogen sulphide was detected at the end of the pressure main after a retention time of <30 minutes.
The same positive effect was observed with the addition of a calcium nitrate solution containing 0.4 % extract and 1 % sodium nitrite.

## Claims

1. Agent for treatment of wastewater for fast suppressing of septic bacteria,
**characterized in that**
it contains an aqueous solution of nitrate and nitrite wherein the counter ions of nitrite are sodium ions and the counter ions of nitrate is calcium ions, and wherein the aqueous solution contains 42 to 45 weight % calcium nitrate and 1 to 4 weight % sodium nitrite.

2. Agent according to claim 1,
**characterized in that**
it further contains an an extract from activated sludge sufficiently supplied with oxygen and/or nitrate.

3. Agent according to claim 1,
**characterized in that**
the aqueous solution contains 42 to 45 weight % calcium nitrate and 1 to 4 weight % sodium nitrite and 0.3 to 5 weight % of extract from activated sludge sufficiently supplied with oxygen and/or nitrate.

4. Method for suppressing of septic bacteria,
**characterized in that**
agent for wastewater treatment according to claims 1 to 3 is added to a waste water treatment plant.

5. Method according to claim 4,
**characterized in that**
50 to 500 mg nitrite/m³ wastewater and 5 to 30 mg/m³ wastewater of extract from activated sludge is added.

6. Method according to claim 4 or 5,
**characterized in that**
all additives are dissolved in a common solution, dosed to the water dependent on volume, temperature and pollution load.

## Patentansprüche

1. Mittel für die Behandlung von Abwasser, um septische Bakterien schnell zu hemmen,
**dadurch gekennzeichnet,**
**dass** es eine wäßrige Lösung von Nitrat und Nitrit enthält, wobei die Gegenionen des Nitrits Natriumionen und die Gegenionen des Nitrats Calciumionen sind
und **dass** die wäßrige Lösung 42 bis 45 Ges.-% Calciumnitrat und 1 bis 4 Gew.-% Natriumnitrit enthält.

2. Mittel nach Anspruch 1,
**dadurch gekennzeichnet,**
**dass** es ferner einen Extrakt von Belebtschlamm enthält, dem ausreichend Sauerstoff und/oder Nitrat zugeführt worden sind.

3. Mittel nach Anspruch 1,
**dadurch gekennzeichnet,**
**dass** die wässrige Lösung
42 bis 45 Ges.-% Calciumnitrat und
1 bis 4 Ges.-% Natriumnitrit und
0,3 bis 5 Gew.-% Extrakt von Belebtschlamm enthält, dem ausreichend Sauerstoff und/oder Nitrat zugeführt worden sind.

4. Verfahren zum Hemmen von septischen Bakterien,
**dadurch gekennzeichnet,**
**dass** einer Anlage zur Abwasserbehandlung ein Mittel für die Behandlung von Abwasser gemäß den Ansprüchen 1 bis 3 zugesetzt wird.

5. Verfahren nach Anspruch 4,
**dadurch gekennzeichnet,**
**dass** 50 bis 500 mg Nitrit / m³ Abwasser und
5 bis 30 mg des Extraktes von Belebtschlamm / m³ Abwasser zugesetzt werden.

6. Verfahren nach Anspruch 4 oder 5,
**dadurch gekennzeichnet,**
**dass** alle Zusätze in einer gemeinsamen Lösung gelöst und dem Wasser in Abhängigkeit von dem Volumen, der Temperatur und der Verschmutzungsbelastung dosiert zugesetzt werden.

## Revendications

1. Agent pour le traitement d'eaux usées pour la suppression rapide de bactéries septiques, **caractérisé en ce qu'**il contient une solution aqueuse de nitrate et de nitrite dans laquelle les contre-ions du nitrite sont des ions sodium et les contre-ions du nitrate sont des ions calcium, et dans lequel la solution aqueuse contient 42 à 45 % en poids de nitrate de calcium et 1 à 4 % en poids de nitrite de sodium.

2. Agent selon la revendication 1, **caractérisé en ce qu'**il contient en outre un extrait de boue activée suffisamment alimentée en oxygène et/ou nitrate.

3. Agent selon la revendication 1, **caractérisé en ce que** la solution aqueuse contient 42 à 45 % en poids de nitrate de calcium et 1 à 4 % en poids de nitrite de sodium et 0,3 à 5 % en poids d'extrait de boue activée suffisamment alimentée en oxygène et/ou nitrate.

4. Procédé de suppression de bactéries septiques, **caractérisé en ce que** de l'agent pour le traitement d'eaux usées selon les revendications 1 à 3 est ajouté à une station de traitement des eaux usées.

5. Procédé selon la revendication 4, **caractérisé en ce que** 50 à 500 mg de nitrite/m³ d'eaux usées et 5 à 30 mg d'extrait de boue activée/m³ d'eaux usées sont ajoutés.

6. Procédé selon la revendication 4 ou 5, **caractérisé en ce que** tous les additifs sont dissous dans une solution commune, ajoutée aux eaux usées en fonction du volume, de la température et de la charge polluante.
